# EUROPEAN PATENT APPLICATION

(11) **EP 3 651 137 A1**
(43) Date of publication of application: **13.05.2020**
(21) Application number: 18205395.9
(22) Date of filing: 09.11.2018
(51) Int. Cl.: G08G 1/16, B60W 30/12, B60W 40/06, G08G 1/01, B60W 50/00

(54) **A VEHICLE CONTROL SYSTEM**

(71) Applicant: Veoneer Sweden AB, 447 83 Vårgårda (SE)
(72) Inventor: Aderum, Tobias, 41470 Göteborg (SE); Tessier, Gil, 00330 Helsinki (FI)
(74) Representative: Sandstedt, Jonas Sven James

(57) **Abstract**

The present disclosure relates to a vehicle control system (1) that comprises a main control unit (2), at least one environment detection sensor (3a, 3b) adapted to detect at least one environment parameter, and a communication unit (4). The vehicle control system (1) is adapted for an ego vehicle (5) travelling on a road (6) that comprises the road lane (12). The communication unit (4) is adapted to supply the main control unit (2) with external data of previous vehicle trajectories on the road such that a resulting previous vehicle trajectory (7) is determined. The main control unit (2) is adapted to determine a safety trajectory (8) based on the resulting previous vehicle trajectory (7) and the at least one detected environment parameter, where the safety trajectory (8) constitutes a preferred ego vehicle trajectory.

## Description

The present disclosure relates to a vehicle control system that comprises a main control unit, at least one environment detection sensor adapted to detect at least one environment parameter, and a communication unit. The vehicle control system is adapted for an ego vehicle travelling on a road.

Many vehicle environment detection systems comprise one or more sensors such as for example radar sensor, LIDAR sensors, camera devices and ultrasonic sensors. These are used for collecting data used for safety arrangements as well as for driver assistance systems.

Road lanes are traditionally defined by road markings painted on the road accordingly to standard road geometry and security requirements, made to be used by human drivers who have their own interpretation. Often these lanes provide larger space than required by vehicle, and can thus offer different possible trajectories for example at a crossing or in a curve, and do not necessarily take into account the road side environment as perceived by the driver.

For this reason, the actual vehicle trajectory is a decision made by the driver and does typically not follow a pure center in the lane as limited by the road markings. In case of an automated vehicle or an automated lane following function, it can be desired that the vehicle behaves like a human and not like a robot. This imply that the vehicle needs to understand and take into account more than the theoretical center lane to follow that lane.

It is therefore desirable to have a vehicle control system that is adapted to enable any type of assisted driving that adapts to the present situation in a more human way than previously known.

The object of the present disclosure is to provide such a vehicle control system.

This object is obtained by means of a vehicle control system that comprises a main control unit, at least one environment detection sensor adapted to detect at least one environment parameter that is related to an extension of a road lane, and a communication unit. The vehicle control system is adapted for an ego vehicle travelling on a road that comprises the road lane. The communication unit is adapted to supply the main control unit with external data of previous vehicle trajectories on the road such that a resulting previous vehicle trajectory is determined. The main control unit is adapted to determine a safety trajectory based on the resulting previous vehicle trajectory and the at least one detected environment parameter, where the safety trajectory constitutes a preferred ego vehicle trajectory.

This enables an attractive "human like" experience while enforcing the best possible safety limits to minimize safety risks.

According to some aspects, an environment parameter comprises at least one of terrain surrounding the road lane, road boundaries, and road surface.

In this way, at least one of many parameters can be used for determining the safety trajectory.

According to some aspects, an environment detection sensor is adapted to detect road boundary markings of a road lane, which road boundary markings constitute a detected environment parameter. The main control unit is adapted to determine a theoretical centerline of the road lane from the road boundary markings, and to determine the safety trajectory based on the resulting previous vehicle trajectory and at least the theoretical centerline.

In this way, a theoretical centerline can be used for determining the safety trajectory, offering an enhanced safety.

According to some aspects, the main control unit is adapted to determine the safety trajectory such that it runs a shorter distance than the theoretical centerline through a curve.

In this way, the safety trajectory can be adapted to curves.

According to some aspects, at least one environment detection sensor is adapted to detect objects on or beside the road. The main control unit is adapted to determine the safety trajectory in dependence of any one of detected oncoming vehicles, detected occluded sight in a crossing, detected obstacles in the road, a slope detected on a side of the road, and a distance between an outer road boundary marking and a road boundary.

In this way, at least one of many parameters can be used for determining the safety trajectory.

According to some aspects, the main control unit is adapted to determine the safety trajectory such that there is a certain distance from a vehicle center to the closest road boundary marking.

This provides yet another parameter for determining the safety trajectory.

According to some aspects, the main control unit is adapted to perform statistical analysis for the external data of previous vehicle trajectories such that certain previous vehicle trajectories are discarded when determining the resulting previous vehicle trajectory.

In this way, for example vehicles involved in erratic driving, and/or speeding, and/or accidents, as well as fast driving emergency vehicles can be discarded when determining the safety trajectory.

According to some aspects, the main control unit is adapted to obtain map data from a map unit for the determining of the safety trajectory.

This provides supplementary data for determining the safety trajectory.

According to some aspects, the vehicle control system comprises a driver assist unit that is adapted to control the ego vehicle to move along the safety trajectory.

In this manner, the safety trajectory can be used for automatic driving.

The present disclosure also related to a method that is associated with the above advantages.

### BRIEF DESCRIPTION OF THE DRAWINGS

The present disclosure will now be described more in detail with reference to the appended drawings, where:
- Figure 1: shows a schematic top view of an ego vehicle on a straight road;
- Figure 2: shows a schematic top view of an ego vehicle in a curve;
- Figure 3: shows a schematic top view of an ego vehicle in a crossing;
- Figure 4: shows a simplified schematic of a vehicle control system;
- Figure 5: shows a flowchart for a method according to the present disclosure; and
- Figure 6: schematically illustrates a main control unit.

### DETAILED DESCRIPTION

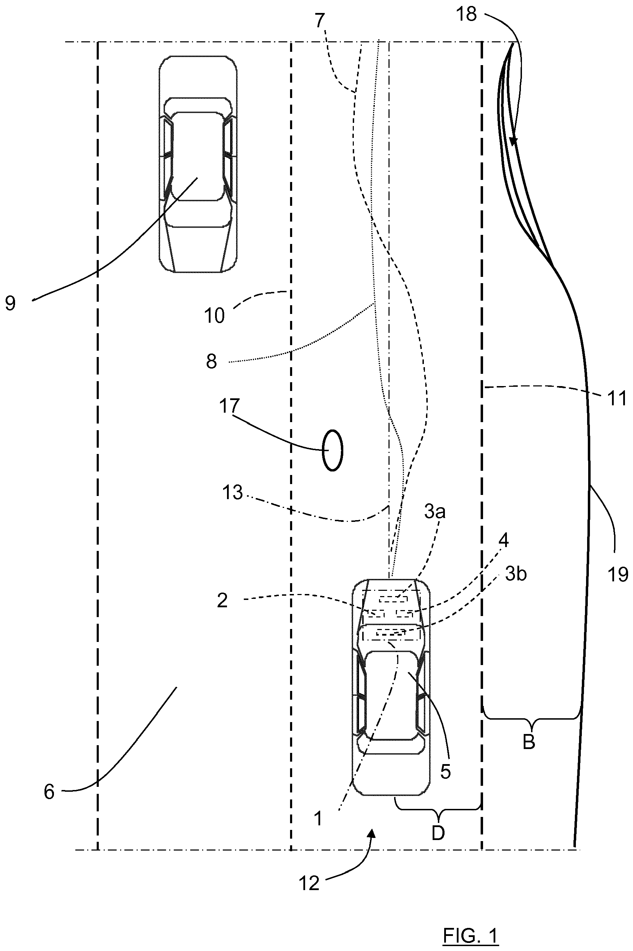

Figure 1 schematically shows a top view of an ego vehicle 5 arranged to run in a road lane 12 on a road 6, where the vehicle 5 comprises a vehicle control system 1. The vehicle control system 1 comprises a main control unit 2, two environment detection sensors 3a, 3b, and a communication unit 4. The environment detection sensors 3a, 3b are adapted to detect at least one environment parameter that is related to an extension of a road lane 12.

According to the present disclosure, the communication unit 4 is adapted to supply the main control unit 2 with external data of previous vehicle trajectories on the road 6 such that a resulting previous vehicle trajectory 7 is determined, being calculated by using statistical analysis of crowdsourced trajectories of previous vehicles.

The main control unit 2 is adapted to determine a safety trajectory 8 based on the resulting previous vehicle trajectory 7 and the at least one detected environment parameter, where the safety trajectory 8 constitutes a preferred ego vehicle trajectory.

In this example, there is a first environment detection sensor 3a that is constituted by a camera vision system and a second environment detection sensor 3b that is constituted by a radar system.

According to some aspects, the first environment detection sensor 3a is adapted to detect road boundary markings 10, 11 of the road lane 12, where the road boundary markings 10, 11 constitute a detected environment parameter.

According to some aspects, the first environment detection sensor 3a is adapted to detect a physical road boundary 13 where the road's lateral extension ends, where the road boundary lies outside the outer road boundary marking 11. According to some aspects, a distance B between the outer road boundary marking 11 and a road boundary 19 is determined. This distance B could vary due to properties of the road boundary 19. In the absence of outer road boundary markings 11, according to some aspects only the road boundary 19 is determined.

In this manner road boundary markings 10, 11 and/or road boundaries geometry 12 are identified and calculated. The main control unit 2 is adapted to determine the safety trajectory 8 based on the resulting previous vehicle trajectory and at least road boundary markings 10, 11 and/or road boundaries geometry 12.

The main control unit 2 is according to some further aspects adapted to determine a theoretical centerline 13 of the road lane 12 from the road boundary markings 10, 11, and to determine the safety trajectory 8 based on the resulting previous vehicle trajectory and at least the theoretical centerline 13. According to some aspects, the main control unit 2 is adapted to determine the safety trajectory such that there is a certain distance D from a vehicle center to the closest road boundary marking 11.

By means of the present disclosure, a safety trajectory 8 is determined that is intended to offer the safest trajectory based on ground truth elements, while at the same time taking previous driving into account in order to understand the best way to use the lane 12.

In this manner, a "human like" experience is achieved, while enforcing the best possible safety limits to minimize safety risks. The merging algorithms used are parametrized to offer variations of comfort, based on specific range of lateral acceleration. Based on the data, it is possible to influence the sensation of safe driving as perceived by passengers. For example:
- Reducing vehicle speed when the distance available to the vehicle, between fixed and moving obstacles is lower than certain thresholds.
- Altering the trajectory to avoid getting too close to road side obstacles, such barriers.
- Driving more to the right side of the road to when there is a wide drivable roadside area existing.

According to some aspects, the present disclosure relates to independently recording ground truth information of the lane 16, road geometry and environment, and previous human behavior on that lane 16. Theoretical center lane information derived from ground truth data is merged with human behavior information derived from crowdsourcing of actual previous vehicles trajectories 7, and adjusting the result based on dynamic environment information derived from traffic information.

The environment detection sensors 3a, 3b are adapted to detect objects on or beside the road 6, where main control unit 2 furthermore, according to some aspects, is adapted to determine the safety trajectory 8 in dependence of detected environment parameters constituted by any one of detected oncoming vehicles 9, detected obstacles 17 in the road 6 and/or a slope 18 detected on a side of the road 6. An obstacle 17 in the road could either be an objects such as a warning cone, warning triangle, warning light or similar, or a damage to the road.

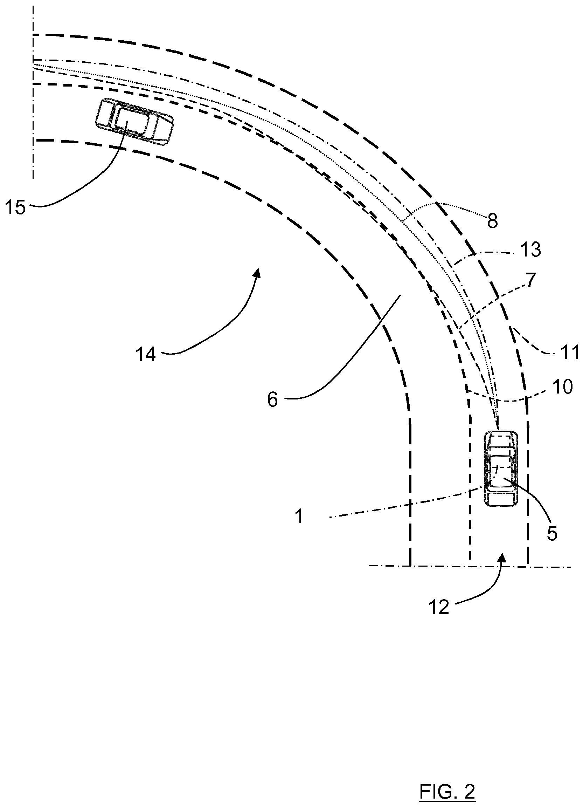

As shown in Figure 2, there is a similar view as in Figure 1, but here the ego vehicle 5 travels on a road 6 that runs in a curve 14. Also here, a theoretical centerline 13 is determined as mentioned above, and according to some aspects, the main control unit 2 is adapted to determine the safety trajectory 8 such that it runs a shorter distance than the theoretical centerline 13 through the curve 14. The resulting previous vehicle trajectory 7 can, as shown in Figure 2, run an even shorter distance, but the safety trajectory 8 is adapted to other factors such as for example oncoming vehicles 15.

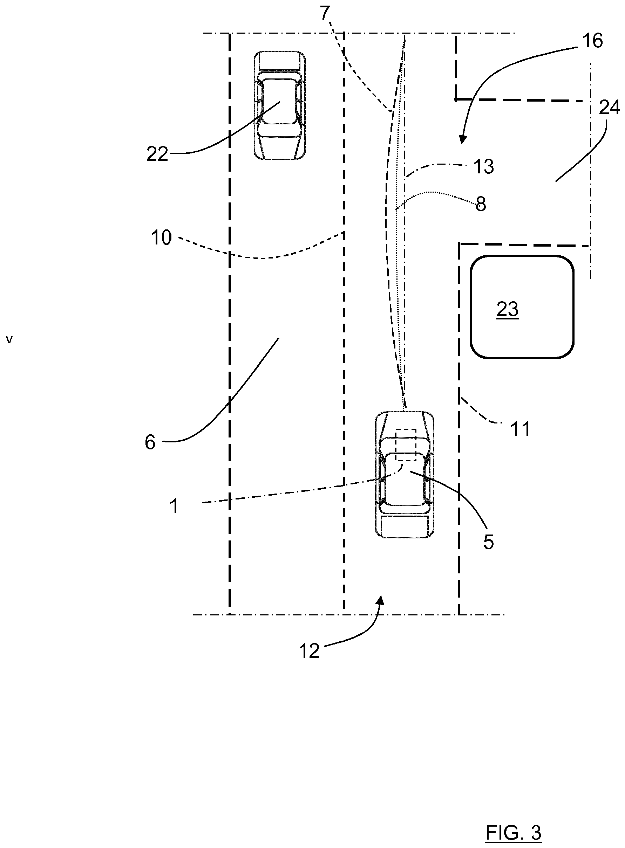

As shown in Figure 3, the ego vehicle 5 travels on a road 6 that passes a road crossing 16 comprising a connecting road part 24, where an object 23 occludes the sight in the crossing 16. It can here be seen that the resulting previous vehicle trajectory 7 runs away from the connecting road part 24 at the road crossing 16, probably due to the object 23 that prevents a driver to see if a vehicle is approaching on the connecting road part 24.

As mentioned previously, the environment detection sensors 3a, 3b are adapted to detect objects on or beside the road 6, and in view of such detected objects, the main control unit 2 is according to some aspects adapted to determine the safety trajectory 8 in view of detected occluded sight in the crossing 16, as well in view of other factors such as for example oncoming vehicles 22. This shows in Figure 3 where the safety trajectory 8 runs between the determined theoretical centerline 13 and the resulting previous vehicle trajectory 7.

Any kind of detected environment parameter can be used together with the resulting previous vehicle trajectory 7 in order to determine the safety trajectory 8. Other environment parameters can according to some aspects comprise at least one of terrain surrounding the road lane, road boundaries and road surface. Such environment parameters can be detected by the environment detection sensors 3a, 3b.

According to some aspects, the main control unit 2 is adapted to perform statistical analysis for the external data of previous vehicle trajectories. In this manner, certain previous vehicle trajectories are discarded when determining the resulting previous vehicle trajectory 7. Such certain previous vehicle trajectories can include vehicles being involved in accidents or uncontrolled driving, vehicles being controlled in an unusual manner such as intercepting police vehicles, as well as drivers being affected by alcohol or similar.

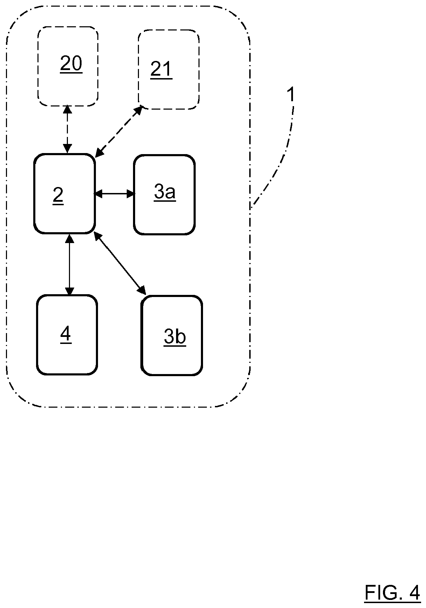

In Figure 4, an example of the vehicle control system 1 is shown, and comprises the main control unit 2, at least one environment detection sensors 3a, 3b and communication unit 4. According to some aspects, the vehicle control system 1 comprises a map unit 20 such as for example a GPS (Global Positioning System) unit, where the main control unit 2 is adapted to obtain map data from the map unit 20 for the determining of the safety trajectory 8.

According to some aspects, the vehicle control system 1 comprises a driver assist unit 21 that is adapted to control the ego vehicle 5 to move along the safety trajectory 8.

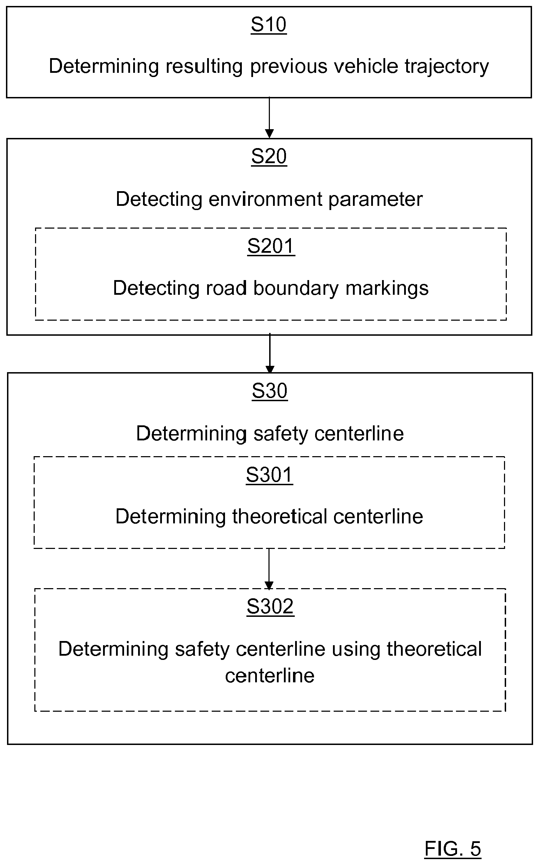

With reference to Figure 5, the present disclosure relates to a method for a vehicle control system 1 used in an ego vehicle 5 travelling on a road 6 that comprises a road lane 12. The method comprises obtaining S10 external data related to previous vehicle trajectories on the road and determining a resulting previous vehicle trajectory 7. The method further comprises detecting S20 at least one environment parameter that is related to an extension of a road lane 12, and determining S30 a safety trajectory 8 based on the resulting previous vehicle trajectory 7 and the at least one detected environment parameter. The safety trajectory 8 constitutes a preferred ego vehicle trajectory.

According to some aspects, an environment parameter comprises at least one of terrain surrounding the road lane, road boundaries and road surface.

According to some aspects, the method comprises detecting S201 road boundary markings 10, 11 of a road lane 12, which road boundary markings 10, 11 constitute a detected environment parameter. The method further comprises determining S301 a theoretical centerline 13 of the road lane 12 from the road boundary markings 10, 11, and determining S302 the safety trajectory 8 based on the resulting previous vehicle trajectory and at least the theoretical centerline 13.

According to some aspects, the method comprises determining the safety trajectory 8 such that it runs a shorter distance than the theoretical centerline 13 through a curve 14.

According to some aspects, at least one environment detection sensor 3a, 3b is used for detecting objects on or beside the road 6, where the method comprises determining the safety trajectory 8 in dependence of any one of:
detected oncoming vehicles 9, 15, 22;
detected occluded sight in a crossing 16;
detected obstacles 17 in the road 6;
a slope 18 detected on a side of the road 6;
a distance B between an outer road boundary marking 11; and
a road boundary 19.

According to some aspects, the method comprises controlling the ego vehicle 5 to move along the safety trajectory 8.

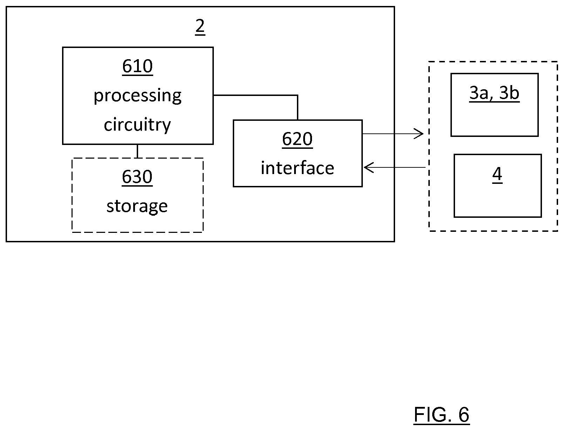

Figure 6 schematically illustrates a main control unit 2 according to aspects of the present disclosure. It is appreciated that the above described methods and techniques may be realized in hardware. This hardware is then arranged to perform the methods, whereby the same advantages and effects are obtained as have been discussed above.

Processing circuitry 610 is provided using any combination of one or more of a suitable central processing unit (CPU), multiprocessor, microcontroller, digital signal processor (DSP), etc., capable of executing software instructions stored in a computer program product, e.g. in the form of a storage medium 630. The processing circuitry 610 may further be provided as at least one application specific integrated circuit (ASIC), or field programmable gate array (FPGA).

Particularly, the processing circuitry 610 is configured to cause the classification unit to perform a set of operations, or steps. For example, the storage medium 630 may store the set of operations, and the processing circuitry 610 may be configured to retrieve the set of operations from the storage medium 630 to cause the classification unit to perform the set of operations. The set of operations may be provided as a set of executable instructions. Thus, the processing circuitry 610 is thereby arranged to execute methods as herein disclosed.

The storage medium 630 may also comprise persistent storage, which, for example, can be any single one or combination of magnetic memory, optical memory, solid state memory or even remotely mounted memory.

The main control unit 2 may further comprise a communications interface 620 for communications with at least one external device such as the environment detection sensors 3a, 3b and the communication unit 4. As such the communication interface 620 may comprise one or more transmitters and receivers, comprising analogue and digital components and a suitable number ports for wireline or wireless communication.

The processing circuitry 610 controls the general operation of the unit, e.g. by sending data and control signals to the communication interface 620 and the storage medium 630, by receiving data and reports from the communication interface 620, and by retrieving data and instructions from the storage medium 630. Other components, as well as the related functionality, of the unit are omitted in order not to obscure the concepts presented herein.

The present disclosure is not limited to the examples above, but may vary freely within the scope of the appended claims. For example, there is at least one environment detection sensor, where the environment detection sensors 3a, 3b can be based on any suitable technology such as camera, radar, Lidar (Light detection and ranging), V2X communication, ultrasonic etc.

According to some aspects, the present disclosure is used for VLDW (Virtual Lane Departure Warning). This means that the obtained safety trajectory can be used by manually driven vehicles which can trigger an HMI (Human Machine Interface) system to alert drivers if the vehicle is drifting outside the lane. To decrease false warnings, the system should not be activated at crossroads or when the driver use the turn indicators. This would increase the benefit of systems like LDW (Lane Departure Warning) which otherwise only work when the system can detect visible lane markings.

According to some aspects, the safety trajectory 8 can be customized to provide, for example, a safer or more sportive experience, demanding on the vehicle segment and targeted customers.

Generally, the present disclosure also relates to a vehicle control system 1 that comprises a main control unit 2, at least one environment detection sensor 3a, 3b adapted to detect at least one environment parameter that is related to an extension of a road lane 12, and a communication unit 4. The vehicle control system 1 is adapted for an ego vehicle 5 travelling on a road 6 that comprises the road lane 12. The communication unit 4 is adapted to supply the main control unit 2 with external data of previous vehicle trajectories on the road such that a resulting previous vehicle trajectory 7 is determined. The main control unit 2 is adapted to determine a safety trajectory 8 based on the resulting previous vehicle trajectory 7 and the at least one detected environment parameter, where the safety trajectory 8 constitutes a preferred ego vehicle trajectory.

According to some aspects, an environment parameter comprises at least one of terrain surrounding the road lane, road boundaries, and road surface.

According to some aspects, an environment detection sensor 3a is adapted to detect road boundary markings 10, 11 of a road lane 12, which road boundary markings 10, 11 constitute a detected environment parameter. The main control unit 2 is adapted to determine a theoretical centerline 13 of the road lane 12 from the road boundary markings 10, 11, and to determine the safety trajectory 8 based on the resulting previous vehicle trajectory and at least the theoretical centerline 13.

According to some aspects, the main control unit 2 is adapted to determine the safety trajectory 8 such that it runs a shorter distance than the theoretical centerline 13 through a curve 14.

According to some aspects, at least one environment detection sensor 3a, 3b is adapted to detect objects on or beside the road 6, where main control unit 2 is adapted to determine the safety trajectory 8 in dependence of any one of:
detected oncoming vehicles 9, 15, 22;
detected occluded sight in a crossing 16;
detected obstacles 17 in the road 6;
a slope 18 detected on a side of the road 6;
a distance B between an outer road boundary marking 11 and a road boundary 19.

According to some aspects, the main control unit 2 is adapted to determine the safety trajectory such that there is a certain distance D from a vehicle center to the closest road boundary marking 11.

According to some aspects, the main control unit 2 is adapted to perform statistical analysis for the external data of previous vehicle trajectories such that certain previous vehicle trajectories are discarded when determining the resulting previous vehicle trajectory 7.

According to some aspects, the main control unit 2 is adapted to obtain map data from a map unit 20 for the determining of the safety trajectory 8.

According to some aspects, the vehicle control system 1 comprises a driver assist unit 21 that is adapted to control the ego vehicle 5 to move along the safety trajectory 8.

## Claims

1. A vehicle control system (1) that comprises a main control unit (2), at least one environment detection sensor (3a, 3b) adapted to detect at least one environment parameter that is related to an extension of a road lane (12), and a communication unit (4), where the vehicle control system (1) is adapted for an ego vehicle (5) travelling on a road (6) that comprises the road lane (12), **characterized in that** the communication unit (4) is adapted to supply the main control unit (2) with external data of previous vehicle trajectories on the road such that a resulting previous vehicle trajectory (7) is determined, where the main control unit (2) is adapted to determine a safety trajectory (8) based on the resulting previous vehicle trajectory (7) and the at least one detected environment parameter, where the safety trajectory (8) constitutes a preferred ego vehicle trajectory.

2. The vehicle control system (1) according to claim 1, wherein an environment parameter comprises at least one of terrain surrounding the road lane, road boundaries and road surface.

3. The vehicle control system (1) according to any one of the claims 1 or 2, wherein an environment detection sensor (3a) is adapted to detect road boundary markings (10, 11) of a road lane (12), which road boundary markings (10, 11) constitute a detected environment parameter, where the main control unit (2) is adapted to determine a theoretical centerline (13) of the road lane (12) from the road boundary markings (10, 11), and to determine the safety trajectory (8) based on the resulting previous vehicle trajectory and at least the theoretical centerline (13).

4. The vehicle control system (1) according to claim 3, wherein the main control unit (2) is adapted to determine the safety trajectory (8) such that it runs a shorter distance than the theoretical centerline (13) through a curve (14).

5. The vehicle control system (1) according to any one of the claims 3 or 4, wherein at least one environment detection sensor (3a, 3b) is adapted to detect objects on or beside the road (6), where main control unit (2) is adapted to determine the safety trajectory (8) in dependence of any one of:
detected oncoming vehicles (9, 15, 22);
detected occluded sight in a crossing (16);
detected obstacles (17) in the road (6);
a slope (18) detected on a side of the road (6);
a distance (B) between an outer road boundary marking (11) and
a road boundary (19).

6. The vehicle control system (1) according to any one of the claims 3-5, wherein the main control unit (2) is adapted to determine the safety trajectory such that there is a certain distance (D) from a vehicle center to the closest road boundary marking (11).

7. The vehicle control system (1) according to any one of the previous claims, wherein the main control unit (2) is adapted to perform statistical analysis for the external data of previous vehicle trajectories such that certain previous vehicle trajectories are discarded when determining the resulting previous vehicle trajectory (7).

8. The vehicle control system (1) according to any one of the previous claims, wherein the main control unit (2) is adapted to obtain map data from a map unit (20) for the determining of the safety trajectory (8).

9. The vehicle control system (1) according to any one of the previous claims, wherein the vehicle control system (1) comprises a driver assist unit (21) that is adapted to control the ego vehicle (5) to move along the safety trajectory (8).

10. A method for a vehicle control system (1) used in an ego vehicle (5) travelling on a road (6) that comprises a road lane (12), **characterized in that** the method comprises:
obtaining (S10) external data related to previous vehicle trajectories on the road and determining a resulting previous vehicle trajectory (7);
detecting (S20) at least one environment parameter that is related to an extension of a road lane (12); and
determining (S30) a safety trajectory (8) based on the resulting previous vehicle trajectory (7) and the at least one detected environment parameter, where the safety trajectory (8) constitutes a preferred ego vehicle trajectory.

11. The method according to claim 10, wherein an environment parameter comprises at least one of terrain surrounding the road lane, road boundaries, road surface.

12. The method according to any one of the claims 10 or 11, wherein the method comprises
detecting (S201) road boundary markings (10, 11) of a road lane (12), which road boundary markings (10, 11) constitute a detected environment parameter;
determining (S301) a theoretical centerline (13) of the road lane (12) from the road boundary markings (10, 11); and determining (S302) the safety trajectory (8) based on the resulting previous vehicle trajectory and at least the theoretical centerline (13).

13. The method according to claim 12, wherein the method comprises determining the safety trajectory (8) such that it runs a shorter distance than the theoretical centerline (13) through a curve (14).

14. The method according to any one of the claims 12 or 13, wherein at least one environment detection sensor (3a, 3b) is used for detecting objects on or beside the road (6), where the method comprises determining the safety trajectory (8) in dependence of any one of:
detected oncoming vehicles (9, 15, 22);
detected occluded sight in a crossing (16);
detected obstacles (17) in the road (6);
a slope (18) detected on a side of the road (6);
a distance (B) between an outer road boundary marking (11); and
a road boundary (19).

15. The method according to any one of the claims 12-14, wherein the method comprises controlling the ego vehicle (5) to move along the safety trajectory (8).
